# EUROPÄISCHE PATENTANMELDUNG

(11) **EP 2 339 246 A2**
(43) Veröffentlichungstag der Anmeldung: **29.06.2011**
(21) Anmeldenummer: 10013389.1
(22) Anmeldetag: 06.10.2010
(51) Int. Cl.: F24D 11/00, F24H 8/00

(54) **Anordnung für eine Backstube mit Wärmerückgewinnung**

(30) Priorität: 06.10.2009 DE 102009048360
(71) Anmelder: Daub Backtechnik GmbH, 21147 Hamburg (DE)
(72) Erfinder: Vogt, Uwe, 19205 Rögnitz (DE); Tiggemann, Sebastian, 21129 Hamburg (DE)
(74) Vertreter: Glawe, Delfs, Moll

(57) **Zusammenfassung**

Die Erfindung betrifft eine Anordnung zum energieeffizienten Betreiben einer Backstube. Die erfindungsgemäße Anordnung (1) zeichnet sich dadurch aus, dass sie wenigstens einen Backofen (6) zum Backen von Backwaren mit einem Kamin (7) umfasst. Die erfindungsgemäße Anordnung (1) zeichnet sich weiterhin dadurch aus, dass ein mit einem flüssigen Wärmeträgermediums gefüllter Laminarturm (10) als schichtend hydraulische Weiche und an dem Kamin (7) des Backofens (6) ein Wärmetauscher (8) vorgesehen ist, wobei der Wärmetauscher (8) zum Erhitzen des flüssigen Wärmeträgermediums im Laminarturm (10) von einer tieferen Temperatur auf eine höhere Temperatur ausgebildet sind und an dem Laminarturm (10) wenigstens ein Verbraucher angeschlossen ist. Der Verbraucher kann dadurch mit Wärmeenergie versorgt werden. Es ist möglich, dass der Backofen (6) als Thermoöl-Backofen ausgeführt ist, und wenigstens eine Thermoölkesselanlage (2) zur Erhitzung von Thermoöl mit einem Kamin (4) sowie ein Leitungspaar (5) zwischen Thermoölkesselanlage (2) und Thermoölbackofen (6) zur Hin- und Rückführung des Thermoöls vorgesehen ist, wobei an dem Kamin (4) der Thermoölkesselanlage (2) ein Rauchgaswärmetauscher (9) vorgesehen ist, der Rauchgaswärmetauscher (9) an dem Laminarturm (10) angeschlossen und zum Erhitzen des flüssigen Wärmeträgermediums im Laminarturm (10) von einer tieferen Temperatur auf eine höhere Temperatur ausgebildet ist. Der Wärmetauscher (8) am Kamin (7) des Backofens (6) kann bei einem Thermoölbackofen ein Schwadenkondensator (8') sein.

Durch die erfindungsgemäße Anordnung (1) wird die beim Backvorgang entstehende Wärme verstärkt ausgenutzt, was den Gesamtwirkungsgrad der erfindungsgemäßen Anordnung (1) gegenüber einer im Stand der Technik bekannten Anlage erhöht.

## Beschreibung

Die Erfindung betrifft eine Anordnung zum energieeffizienten Betreiben einer Backstube.

Im Stand der Technik sind Heizgasbacköfen bekannt, bei denen Heizgas zum Erhitzen des Backraums eines Heizgasbackofens im Backofen selbst verbrannt wird. Die durch die Verbrennung entstehenden Abgase werden durch einen Kamin ausgestoßen.

Im Stand der Technik sind weiterhin Thermoöl-Backöfen bekannt, in denen die für das Backen erforderliche Hitze nicht im Backofen selbst erzeugt, sondern vielmehr von außen über Thermoöl zugeführt wird. Das Thermoöl wird an einer vom Backofen getrennten Einheit - einer Thermoölkesselanlage - erhitzt. In der Regel wird dazu Gas in einem Brennraum der Thermoölkesselanlage verbrannt. Das erhitzte Thermoöl wird dann dem Backofen zugeführt, wo es der Erhitzung des Backraums und der darin befindlichen Backwaren dient. Dabei gibt das Thermoöl Wärmeenergie ab und kühlt folglich ab. Das abgekühlte Thermoöl wird dann der Thermoölkesselanlage rückgeführt, wo es erneut erhitzt werden kann.

Entsprechend bekannte Anordnungen für Backstuben umfassen wenigstens einen Backofen, der auch ein Thermoölbackofen sein kann. Bei solchen Anordnungen aus dem Stand der Technik tritt ein hoher Energieverlust durch Verlustwärme auf.

Aufgabe der vorliegenden Erfindung ist es, eine gegenüber dem Stand der Technik verbesserte Anordnung für Backstuben zu schaffen, bei der der Energieverlust durch Verlustwärme möglichst gering ist.

Ausgehend vom eingangs genannten Stand der Technik wird diese Aufgabe durch eine Anordnung gemäß dem Hauptanspruch gelöst. Vorteilhafte Ausführungsformen ergeben sich aus den abhängigen Ansprüchen.

Demnach betrifft die Erfindung eine Anordnung zum energieeffizienten Betreiben einer Backstube umfassend wenigstens einem Backofen zum Backen von Backwaren mit einem Kamin, wobei ein mit einem flüssigen Wärmeträgermedium gefüllter Laminarturm als schichtend hydraulische Weiche und an dem Kamin des Backofens ein Wärmetauscher vorgesehen ist, wobei der Wärmetauscher an dem Laminarturm angeschlossen und zum Erhitzen des flüssigen Wärmeträgermediums im Laminarturm von einer tieferen Temperatur auf eine höhere Temperatur ausgebildet sind und an dem Laminarturm wenigstens ein Verbraucher angeschlossen ist.

Erfindungsgemäß ist vorgesehen, die Abwärme und bei dem wenigstens einen Backofen durch den Kamin in Form von Heißluft und/oder Rauchgas ausgestoßen wird, über Wärmetauscher so nutzbar zu machen, dass ein flüssiges Wärmeträgermedium in einem Laminarturm erhitzt wird. Das durch die Wärmetauscher erhitzte Wärmeträgermedium kann wiederum dazu verwendet werden, einen Verbraucher mit Wärmeenergie zu versorgen. Wird aus dem Kamin des Backofens Rauchgas ausgestoßen, kann es sich bei dem Wärmetauscher insbesondere um einen Rauchgaswärmetauscher handeln. Werden durch den Kamin des Backofens heiße Dämpfe ausgestoßen, kann der Wärmetauscher ein Schwadenkondensator sein.

Bei einem Laminarturm, der als schichtend hydraulische Weiche funktioniert, handelt es sich im Prinzip um einen aufrecht stehenden, schlanken Tank, der mit einem flüssigen Wärmeträgermedium gefüllt ist. Auf Grund natürlicher Konvektion des flüssigen Wärmeträgermediums, welches sich frei im Laminarturm bewegen kann, bilden sich innerhalb des Laminarturms verschiedene Schichten mit unterschiedlicher Temperatur aus, wobei sich dabei am unteren Ende des Laminarturms die niedrigste, am oberen Ende die höchste Temperatur einstellt. Auf verschiedenen Höhen des Laminarturms sind Zu- und/oder Abflüsse vorgesehen. Ist die Temperaturverteilung im Laminarturm statisch, so steht die vertikale Position der einzelnen Zu- und/oder Abflüssen im direkten Verhältnis zu der Temperatur des Laminarturms an der Stelle des jeweiligen Zu- oder Abflusses. Über einen Abfluss am Laminarturm kann also das Wärmeträgermedium bei einer festgelegten Temperatur dem Laminarturm entnommen werden. Wird Wärmeträgermedium über einen Zufluss dem Laminarturm zugeführt, so sollte es bevorzugt in die Schicht im Laminarturm eingebracht werden, die seiner Temperatur entspricht.

Der Wärmetauscher ist so an dem Laminarturm angeschlossen, dass dem Laminarturm das flüssige Wärmeträgermedium mit einer niedrigen Temperatur - also eher im unteren Bereich des Laminarturms - entnommen und dem Wärmetauscher zugeführt wird. Das Wärmeträgermedium wird dann im Wärmetauscher erhitzt und anschließend dem Laminarturm mit einer erhöhten Temperatur - also eher dem oberen Bereich des Laminarturms - zugeführt. Dabei kommt es nicht darauf an, wo sich genau die Zu- und Abflüsse am Laminarturm befinden. Allerdings ist bei solchen geschlossenen Kreisläufen wie dargestellt, in denen dem Wärmeträgermedium aus dem Laminarturm Energie, sprich Wärme, zugeführt wird, erforderlich, dass der entsprechende Zufluss am Laminarturm oberhalb des Abflusses befindet. Indem der Abflussanschluss variabel in seiner Höhe am Laminarturm vorgesehen werden kann, ist die anfängliche Temperatur, die das Wärmeträgermedium bei der Zuführung zum Wärmetauscher aufweist, variabel. Insbesondere kann eine solche Temperatur gewählt werden, bei der der Wirkungsgrad des Wärmetauschers optimal ist.

Bei Verbrauchern sind die Anschlüsse am Laminarturm so angeordnet, dass sich der Abfluss oberhalb von dem Zufluss befindet. Das Wärmeträgermedium wird mit einer höheren Temperatur dem Verbraucher zugeführt, wo ihm Energie in Form von Wärme entzogen wird. Das dann bei einer niedrigeren Wärmetemperatur vorliegende Wärmeträgermedium wird dem Laminarturm in eine Schicht entsprechend seiner Temperatur wieder zugeführt. Auch hierbei handelt es sich um einen geschlossenen Kreislauf für das Wärmeträgermedium.

Es ist bevorzugt, wenn der Backofen als Thermoöl-Backofen ausgeführt ist. Es ist dann wenigstens eine Thermoölkesselanlage zur Erhitzung von Thermoöl mit einem Kamin sowie ein Leitungspaar zwischen Thermoölkesselanlage und Thermoöl-Backofen zur Hin- und Rückführung des Thermoöls vorgesehen ist. In einer Thermoölkesselanlage wird das Thermoöl mithilfe der Verbrennung von Brennstoff in einem Brennraum erhitzt. An dem Kamin der Thermoölkesselanlage ist ein Rauchgaswärmetauscher vorgesehen, wobei der Rauchgaswärmetauscher an dem Laminarturm angeschlossen und zum Erhitzen des flüssigen Wärmeträgermediums im Laminarturm von einer tieferen Temperatur auf eine höhere Temperatur ausgebildet ist. Da im Backofen selbst keine Verbrennungsabgase sondern lediglich beim Backen entstehende Dämpfe erzeugt werden, kann der Wärmetauscher am Kamin des Backofens bevorzugt ein Schwadenkondensator sein.

Es ist bevorzugt wenn es sich bei dem Verbraucher um ein Heizungssystem, vorzugsweise um ein Raumheizungssystem handelt. Alternativ oder zusätzlich kann auch ein System zur Erhitzung von Frischwasser vorgesehen sein. Das System zur Erhitzung von Frischwasser kann einen an dem Laminarturm angeschlossenen, mit Wärmeträgermedium gefüllten Pufferspeicher umfassen, der durch Austausch von Wärmeträgermedium mit dem Laminarturm auf eine im Wesentlichen konstante Temperatur gehalten wird. An dem Pufferspeicher kann dann ein Wärmetauscher zur Erhitzung von Frischwasser vorgesehen sein. Es ist auch möglich, dass ein mit Frischwasser gefüllter Frischwasserspeicher vorgesehen ist, dessen Inhalt über einen an den Laminarturm angeschlossenen Wärmetauscher erhitzt bzw. auf konstanter Temperatur gehalten wird. Es ist ebenso möglich, dass mehrere Systeme zur Erhitzung von Frischwasser eingesetzt werden, wobei diese unterschiedlicher Bauart sein können. Als Verbraucher können auch Garraumheizungen und/oder Gärunterbrecher am Laminarturm angeschlossen sein. Neben der Wärmegewinnung über Wärmetauscher am Kamin des Backofens und/oder der Thermoölkesselanlage können noch weitere Komponenten vorgesehen sein, mit denen das Wärmeträgermedium im Laminarturm von einer tieferen Temperatur auf eine höhere Temperatur erhitzt werden kann. So ist es beispielsweise möglich, dass ein Solarkollektor zur vorgenannten Erhitzung vorgesehen ist. Das Wärmeträgermedium aus dem Laminarturm wird bei einer tieferen Temperatur dem Solarkollektor zugeführt und dort durch die Sonneneinstrahlung auf eine höhere Temperatur erhitzt. Anschließend wird das erhitzte Wärmeträgermedium entsprechend seiner nun erhöhten Temperatur dem Laminarturm wieder zugeführt.

Alternativ oder zusätzlich ist es möglich, am Laminarturm einen elektrischen oder gasbetriebenen Nacherhitzer anzuschließen. Der Nacherhitzer erhitzt aus dem Laminarturm stammendes Wärmeträgermedium mittels eines Verbrennungsvorgangs von Gas oder eines elektrischen Heizelementes von einer niedrigeren Temperatur auf eine höhere Temperatur. Anschließend wird das Wärmeträgermedium dem Laminarturm wieder zugeführt. Es ist auch möglich, dass ein Nacherhitzer vorgesehen ist, der mit Thermoöl betrieben wird. Das heiße Thermoöl kann dabei direkt von einer bereits vorhandenen Thermoölkesselanlage stammen. Es ist aber auch möglich, dass das Thermoöl, welches bereits in einem Thermoöl-Backofen einen Teil seiner gespeicherten Wärmeenergie an den Backraum abgegeben hat, im Nacherhitzer eingesetzt wird. Dadurch kann der Thermoöl-Kreislauf gekühlt werden.

Es ist auch möglich, dass die Thermoölkesselanlage direkt am Laminarturm angeschlossen ist. In diesem Fall wird das Wärmeträgermedium entweder direkt im Brennraum der Thermoölkesselanlage, jedoch getrennt von dem Thermoöl, erhitzt oder es ist ein Wärmetauscher in der Thermoölkesselanlage vorgesehen, mit dem Wärme vom Thermoöl auf das Wärmeträgermedium übertragen werden kann.

Der Laminarturm selbst fasst nur ein geringes Volumen des Wärmeträgermediums, um eine effiziente Arbeitsweise zu ermöglichen. Besteht Bedarf, das Wärmeträgermedium bei einer bestimmten Temperatur in größerem Umfang bereit zu halten, kann ein Pufferspeicher vorgesehen sein. Der Pufferspeicher ist dabei mit dem gleichen Wärmeträgermedium gefüllt wie der Laminarturm. Für einen Pufferspeicher befinden sich Zu- und Abfluss am Laminarturm nahezu auf gleicher Höhe. Bei Betrieb der Anlage wird der Pufferspeicher über den Austausch von Wärmeträgermedium mit dem Laminarturm auf die gewünschte Temperatur gebracht. Fällt die Temperatur im Laminarturm ab, kann die Wärmeenergie vom Pufferspeicher zurück in den Laminarturm transferiert werden.

Alternativ oder zusätzlich zu einem oder mehreren vorgenannten Pufferspeichern kann ein Wärmespeicher vorgesehen sein, bei dem die Wärmespeicherung durch ein anderes Wärmeträgermedium als im Laminarturm erfolgt. Um Wärmeenergie zu Speichern wird ein Wärmetauscher eingesetzt, mit dem Wärmeenergie vom Wärmeträgermedium aus dem Laminarturm auf das Wärmeträgermedium im Wärmespeicher übertragen werden kann und umgekehrt. Besonders bevorzugt ist es, wenn es sich bei dem Wärmeträgermedium in dem Wärmespeicher um ein Alcangemisch handelt. Ein entsprechendes Gemisch weist weit bessere Wärmespeicherungseigenschaften auf als bspw. Wasser, welches als Wärmeträgermedium im Laminarturm eingesetzt werden kann. Das Alcangemisch bietet den Vorteil eines geringen Platzbedarfes bei gleichzeitig hoher Energieaufnahme. So ist die Wärmespeichermöglichkeit von 280 l Alcangemisch gleich der Wärmespeichermöglichkeit von 1000 l Wasser. Dies wird erreicht durch reversible thermodynamische Zustandsänderungen des Alcangemisches von flüssig zu fest und umgekehrt. Das Alcangemisch ist dabei zyklenstabil.

Die Thermoölkesselanlage kann eine Brennerluftzuführung aufweisen. Es ist bevorzugt, dass die Brennerluftzuführung und der Kamin der Thermoölkesselanlage als Doppelrohr-Wärmetauscher ausgeführt sind. Dabei werden die Abgase durch das innere Rohr eines doppelwandigen Rohres geführt, während die Brennerluft durch den äußeren ringförmigen Bereich des Rohres geleitet wird. Durch die Rauchgaswärmetauscher nichtgenutzte Abwärme kann so verwendet werden, um die Bennerluft vorzuwärmen. Damit lässt sich der Wirkungsgrad der Thermoölkesselanlage verbessern.

Es ist weiter bevorzugt, wenn am Kamin der Thermoölkesselanlage eine Abgasklappe zum wahlweise verschließen des Kamins vorgesehen ist. Mit Hilfe einer entsprechenden Abgasklappe ist es möglich, den Kamin immer dann zu verschließen, wenn in der Thermoölkesselanlage kein Brennstoff verbrannt wird. Durch die Abgasklappe kann verhindert werden, dass gegenüber dem Brennraum kühlere Umgebungsluft durch den Kamin in den Brennraum eintritt. Ein unnötiger Energieverlust bzw. Energieaufwand zum Wiederaufheizen des Brennraums wird dadurch vermieden. Dies wirkt sich positiv auf den Wirkungsgrad der Thermoölkesselanlage aus.

Besonders bevorzugt ist es, wenn die Thermoölkesselanlage als Biomasseverbrennungsanlage ausgeführt ist, bei der als Brennstoff Biomasse eingesetzt wird. Weiter bevorzugt ist es wenn als flüssiges Wärmeträgermedium im Laminarturm Wasser verwendet wird.

Die Erfindung wird nun anhand vorteilhafter Ausführungsformen unter Bezugnahme auf die beigefügten Zeichnungen beispielhaft beschrieben. Es zeigen:
- Fig. 1:: eine schematische Darstellung einer ersten Ausfüh- rungsform einer erfindungsgemäßen Anordnung;
- Fig. 2:: eine schematische Darstellung einer zweiten Ausfüh- rungsform einer erfindungsgemäßen Anordnung;
- Fig. 3:: eine schematische Darstellung einer dritten Ausfüh- rungsform einer erfindungsgemäßen Anordnung;
- Fig. 4:: eine schematische Darstellung einer vierten Ausfüh- rungsform einer erfindungsgemäßen Anordnung;
- Fig. 5:: eine schematische Darstellung einer fünften Ausfüh- rungsform einer erfindungsgemäßen Anordnung; und
- Fig. 6:: eine schematische Darstellung einer sechsen Ausfüh- rungsform einer erfindungsgemäßen Anordnung; und
- Fig. 7:: eine Gesamtansicht einer Thermokesselanlage.

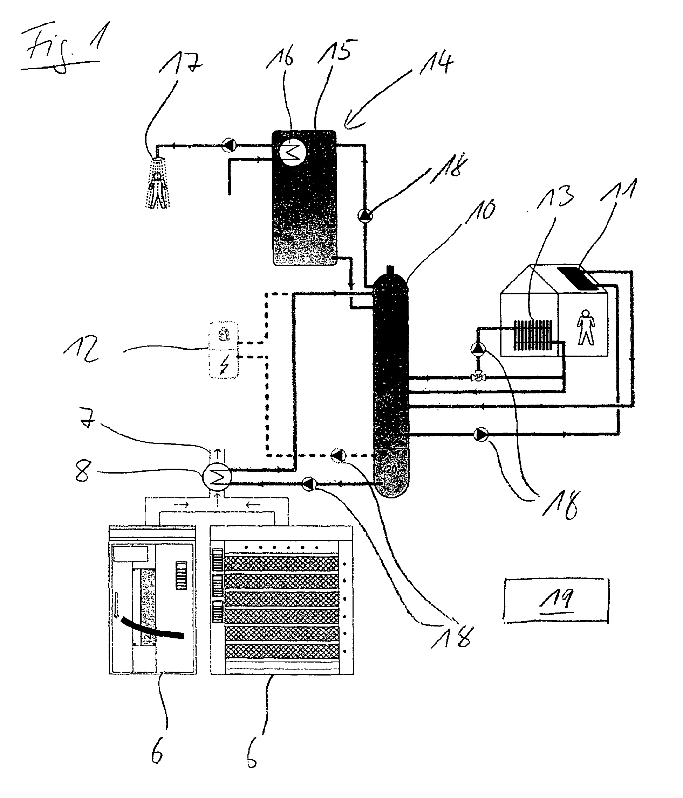

In Figur 1 ist eine erste Ausführungsform einer Erfindungsgemäßen Anordnung 1 dargestellt.

Die Anordnung umfasst einen Heizgasbackofen 6, in dem Gas zur Erhitzung des Backraums verbrannt wird. Die beim Backen von Backwaren in dem Backofen 6 entstehenden Verbrennungsabgase und sonstigen Dämpfe werden über einen oder mehrere Kamine 7 abgeführt. Mehrere Backöfen 6 können, wie im dargestellten Ausführungsbeispiel, einen gemeinsamen Kamin 7 verwenden.

An dem Kamin 7 der Backöfen 6 ist ein Wärmetauscher 8 vorgesehen. Der Wärmetauscher 8 ist an einem Laminarturm 10 angeschlossen und als Rauchgaswärmetauscher ausgeführt.

Bei dem Laminarturm 10 handelt es sich um eine schichtend hydraulische Weiche, bei der sich auf Grund von natürlicher Konvektion innerhalb eines senkrecht aufgerichteten, schlanken Behälters ein flüssiges Wärmeträgermedium in verschiedenen Temperaturschichten anordnet. Dabei ist am unteren Ende des Laminarturms 10 die niedrigste Temperatur anzutreffen, während am obersten Ende des Laminarturms 10 die höchste Temperatur vorherrscht. Beispielhaft sind in Figur 1 die verschiedenen Temperaturschichten im Laminarturm 10 schematisch dargestellt.

Der Wärmetauscher 8 ist so an dem Laminarturm angeschlossen, dass ihnen vom Laminarturm 10 flüssiges Wärmeträgermedium bei einer niedrigeren Temperatur zugeführt wird, das Wärmeträgermedium dann in dem Wärmetauscher 8 erhitzt wird und das Wärmeträgermedium mit der erhöhten Temperatur dann in die der Temperatur entsprechenden Schicht dem Laminarturm 10 wieder zugeführt wird. Die niedrigere Temperatur bei diesem Prozess ist frei wählbar in dem Temperaturbereich, den der Laminarturm über seine Höhe abdeckt. Sie kann daher so gewählt werden, dass der Wirkungsgrad des Wärmetauschers 8 möglichst optimal ist. So heizt der Wärmetauscher 8 das Wärmeträgermedium des Laminarturms 10 von 75°C auf 90°C aufheizt.

Neben dem Wärmetauscher 8 ist weiterhin ein Solarkollektor 11 zur Erhitzung des Wärmeträgermediums im Laminarturm 10 von einer tieferen Temperatur auf eine höhere Temperatur angeschlossen. Das Wärmeträgermedium wird bei einer niedrigeren Temperatur (im dargestellten Beispiel 30°C) dem Laminarturm entnommen und einem Solarkollektor 11 zugeführt, wo es durch Sonneneinstrahlung aufgeheizt wird. Das Wärmeträgermedium, welches dann bei einer höheren Temperatur (im dargestellten Beispiel 45°C) vorliegt, wird entsprechend dieser Temperatur dem Laminarturm 10 wieder zugeführt.

Ebenfalls vorgesehen ist ein Nacherhitzer 12, der das flüssige Wärmeträgermedium im Laminarturm 10 von einer tieferen Temperatur auf eine höhere Temperatur aufheizen kann. Der Nacherhitzer 12 kann wahlweise elektrisch oder mit Gas betrieben werden.

Als ein Verbraucher ist am Laminarturm 10 ein Raumheizungssystem 13 angeschlossen. Für das Raumheizungssystem 13 wird dem Laminarturm 10 das Wärmeträgermedium bei einer bestimmten Temperatur (im dargestellten Beispiel 60°C) entnommen und dann zum Heizen von Räumen verwendet. Dabei gibt das Wärmeträgermedium Wärmeenergie ab, so dass seine Temperatur (auf im dargestellten Beispiel 45°C) sinkt. Das abgekühlte Wärmeträgermedium wird dem Laminarturm 10 dann entsprechend seiner Temperatur wieder zugeführt.

Ebenfalls als Verbraucher angeschlossen ist ein System zur Erhitzung von Frischwasser 14. Das System zur Erhitzung von Frischwasser 14 umfasst einen Pufferspeicher 15, der so an den Laminarturm 10 angeschlossen ist, dass er bei einer im Wesentlichen konstanten Temperatur (im Beispiel ca. 90°C) verbleibt. Es ist aber auch möglich, dass die Temperatur im Pufferspeicher 15 über die Zeit variabel steuerbar ist. Im Pufferspeicher 15 abgekühltes Wärmeträgermedium wird dem Laminarturm 10 zurückgeführt und durch Wärmeträgermedium einer höheren Temperatur ersetzt. Der Pufferspeicher 15 ist mit dem gleichen Wärmeträgermedium wie der Laminarturm gefüllt. Das System zur Erhitzung von Frischwasser 14 umfasst weiterhin einen Wärmetauscher 16, mit dessen Hilfe Wärmeenergie von dem Wärmeträgermedium im Pufferspeicher 15 an durch den Wärmetauscher 16 fließendes Frischwasser abgegeben wird. Dadurch wird Warmwasser gewonnen, welches beispielsweise für sanitäre Einrichtungen 17 verwendet werden kann.

In jedem Kreislauf für das Wärmeträgermedium, der am Laminarturm 10 angeschlossen ist, ist eine Pumpe 18 vorgesehen. Mit den Pumpen 18 lässt sich der Wärmeträgermediumsdurchfluss für jeden Kreislauf regulieren. Dadurch ist eine genaue Regelung der Wärmezu- und -abflüsse in und von dem Laminarturm 10 möglich.

Im Falle von wechselnden Zu- und Abflüssen kann die Anordnung eine Steuerungseinheit 19 umfassen, die auf die einzelnen Komponenten der Anordnung Einfluss nehmen kann. Sie ist dazu ausgebildet, die einzelnen Komponenten - bspw. der Nacherhitzer 12 oder die Pumpen 18 - so anzusteuern, dass die in Figur 1 dargestellte Temperaturverteilung im Laminarturm 10 grundsätzlich aufrechterhalten wird. Die dafür erforderlichen Sensoren - bspw. Temperatursensoren im Laminarturm 10 - und Steuerleitungen sind aus Gründen der Übersichtlichkeit in Figur 1 nicht dargestellt.

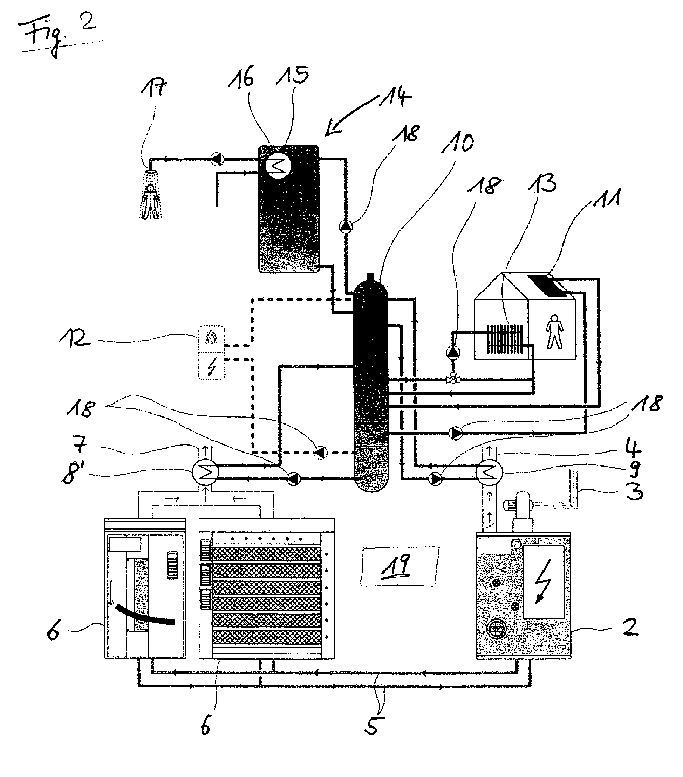

In Figur 2 ist ein zweites Ausführungsbeispiel einer erfindungsgemäßen Anordnung 1 dargestellt.

Die Anordnung 1 umfasst eine Thermoölkesselanlage 2, in der mit Hilfe eines Verbrennungsvorgangs von Gas Thermoöl erhitzt wird. Die für die Verbrennung erforderliche Brennerluft wird über eine Brennerluftzufuhr 3 der Thermoölkesselanlage 2 zugeführt. Die bei der Verbrennung entstehenden Abgase werden durch den Kamin 4 ausgestoßen.

Das erhitzte Thermoöl wird über eine Leitung eines Leitungspaares 5 einem oder mehreren Backöfen 6 zugeführt, wobei die Backöfen als Thermoölbacköfen ausgeführt sind. In den Backöfen 6 wird das Thermoöl dazu verwendet, den Backraum der Backöfen 6 auf die für den Backvorgang gewünschte Temperatur zu bringen. Dabei wird dem Thermoöl Wärme entzogen. Das abgekühlte Thermoöl wird dann über die andere Leitung des Leitungspaares 5 der Thermoölkesselanlage 2 zurückgeführt. Dort kann das Thermoöl von neuem erhitzt werden.

Die beim Backen von Backwaren in dem Backofen 6 entstehenden Dämpfe werden über einen oder mehrere Kamine 7 abgeführt. Anders als beim Ausführungsbeispiel gemäß Figur 1 entstehen im Backofen 6 selbst keine Verbrennungsabgase mehr. Mehrere Backöfen 6 können, wie im dargestellten Ausführungsbeispiel, einen gemeinsamen Kamin 7 verwenden.

An dem Kamin 4 der Thermoölkesselanlage 2 ist ein Rauchgaswärmetauscher 9 vorgesehen. Ähnliches gilt für den Kamin 7 der Backöfen 6, wobei anstelle eines als Rauchgaswärmetauscher ausgebildeten Wärmetauschers 8 wie in Figur 1 ein Schwadenkondensator 8' vorgesehen ist. Dies ist möglich, da in den Backöfen 6 keine Verbrennungsabgase entstehen. Rauchgaswärmetauscher 9 und Schwadenkondensator 8' sind an einem Laminarturm 10 angeschlossen. Zur Erläuterung des Laminarturms 10 wird auf die Ausführungen zu Figur 1 verwiesen.

Der Rauchgaswärmetauscher 9 und der Schwadenkondensator 8' sind so an dem Laminarturm 10 angeschlossen, dass ihnen vom Laminarturm 10 flüssiges Wärmeträgermedium bei einer niedrigeren Temperatur zugeführt wird, das Wärmeträgermedium dann im Rauchgaswärmetauscher 9 oder Schwadenkondensator 8' erhitzt wird und das Wärmeträgermedium mit der erhöhten Temperatur dann in die der Temperatur entsprechenden Schicht dem Laminarturm 10 wieder zugeführt wird. Die niedrigere Temperatur bei diesem Prozess ist frei wählbar in dem Temperaturbereich, den der Laminarturm über seine Höhe abdeckt. Sie kann daher so gewählt werden, dass der Wirkungsgrad des Rauchgaswärmetauscher 9 bzw. des Schwadenkondensators 8' möglichst optimal ist. So heizt der Schwadenkondensator 8' am Kamin 7 der Backöfen 6 das Wärmeträgermedium des Laminarturms 10 von 20°C auf 60°C auf, während der Rauchgaswärmetauscher 9 am Kamin 4 der Thermoölkesselanlage 2 das Wärmeträgermedium des Laminarturms 10 von 75°C auf 90°C aufheizt.

Neben Rauchgaswärmetauscher 9 und Schwadenkondensator 8' ist weiterhin ein Solarkollektor 11 zur Erhitzung des Wärmeträgermediums im Laminarturm 10 von einer tieferen Temperatur auf eine höhere Temperatur angeschlossen. Ebenfalls vorgesehen ist ein Nacherhitzer 12, der das flüssige Wärmeträgermedium im Laminarturm 10 von einer tieferen Temperatur auf eine höhere Temperatur aufheizen kann. Als ein Verbraucher ist am Laminarturm 10 ein Raumheizungssystem 13 angeschlossen. Ebenfalls als Verbraucher angeschlossen ist ein System zur Erhitzung von Frischwasser 14. Zur Erläuterung des Solarkollektors 11, des Nacherhitzers 12, des Raumheizungssystems 13 und des Systems zur Erhitzung von Frischwasser 14 wird auf die Ausführungen zu Figur 1 verwiesen.

In jedem Kreislauf für das Wärmeträgermedium, der am Laminarturm 10 angeschlossen ist, ist eine Pumpe 18 vorgesehen. Mit den Pumpen 18 lässt sich der Wärmeträgermediumsdurchfluss für jeden Kreislauf regulieren. Dadurch ist eine genaue Regelung der Wärmezu- und -abflüsse in und von dem Laminarturm 10 möglich.

Im Falle von wechselnden Zu- und Abflüssen kann die Anordnung eine Steuerungseinheit 19 umfassen, die auf die einzelnen Komponenten der Anordnung Einfluss nehmen kann. Sie ist dazu ausgebildet, die einzelnen Komponenten - bspw. der Nacherhitzer 12 oder die Pumpen 18 - so anzusteuern, dass die in Figur 1 dargestellte Temperaturverteilung im Laminarturm 10 grundsätzlich aufrechterhalten wird. Die dafür erforderlichen Sensoren - bspw. Temperatursensoren im Laminarturm 10 - und Steuerleitungen sind aus Gründen der Übersichtlichkeit in Figur 2 nicht dargestellt.

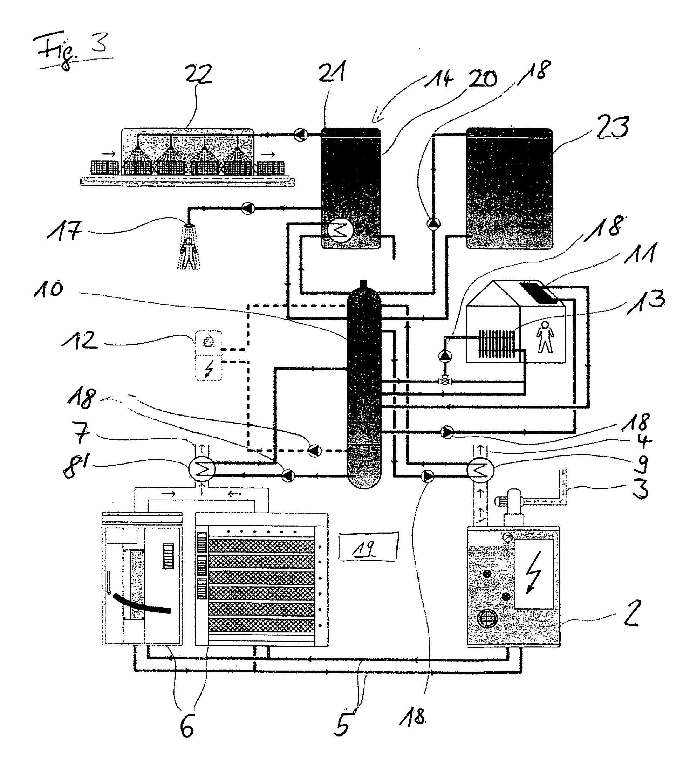

In Figur 3 ist ein drittes Ausführungsbeispiel einer erfindungsgemäßen Anordnung 1 dargestellt. Auf Grund der großen Übereinstimmung zu dem Ausführungsbeispiel aus Figur 2 wird im Folgenden nur auf die Unterschiede zu diesem Ausführungsbeispiel eingegangen. Im Übrigen wird auf die Ausführungen zu Figur 2 verwiesen. Die nachstehenden Unterschiede zu Figur 2 lassen sich im Übrigen aber auch auf das Ausführungsbeispiel gemäß Figur 1 übertragen.

Das System zur Erhitzung von Frischwasser 14 ist im Gegensatz zu dem Ausführungsbeispiel aus Figuren 1 und 2 anders aufgebaut. Das System zur Erhitzung von Frischwasser 14 umfasst einen Trinkwasserspeicher 20. Dieser Trinkwasserspeicher 20 wird über einen Wärmetauscher 21, der mit dem Laminarturm 10 verbunden ist, erhitzt. Der Wärmetauscher 21 ist dabei wie ein Verbraucher an dem Laminarturm 10 angeschlossen. Bei Warmwasserbedarf kann erhitztes Frischwasser dem Frischwassertank 20 entnommen werden. Der Trinkwasserspeicher 20 wird dementsprechend mit Frischwasser aufgefüllt, welches über den Wärmetauscher 21 wiederum erhitzt wird. Das System zur Erhitzung von Frischwasser 14 gemäß dem Ausführungsbeispiel aus Figur 3 eignet sich für einen gegenüber dem Ausführungsbeispiel aus Figuren 1 und 2 erhöhten Warmwasserbedarf. So ist es bspw. neben sanitären Einrichtung 17 auch eine Spülmaschine 22 mit Warmwasser zu versorgen.

Zusätzlich ist im Ausführungsbeispiel gemäß Figur 3 an dem Laminarturm 10 noch ein Pufferspeicher 23 angeschlossen. Der Pufferspeicher 23 ist mit dem gleichen Wärmeträgermedium gefüllt wie der Laminarturm 10. Durch Austausch des Wärmeträgermediums zwischen Laminarturm 10 und Pufferspeicher 21 wird der Pufferspeicher annähernd auf die Temperatur entsprechend der Höhe des Abflusses am Laminarturm 10 gebracht, im dargestellten Beispiel 90°C. Fällt eines der Elemente, die der Erhitzung des Wärmeträgermediums im Laminarturm 10 dienen, aus, so kann über die im Pufferspeicher 22 gespeicherte Wärmeenergie die Wärmeverteilung im Laminarturm 10 noch über einen sehr langen Zeitraum nach dem Ausfall einer entsprechenden Komponente aufrechterhalten werden. Ein Produktionsstopp kommt einem Ausfall gleich.

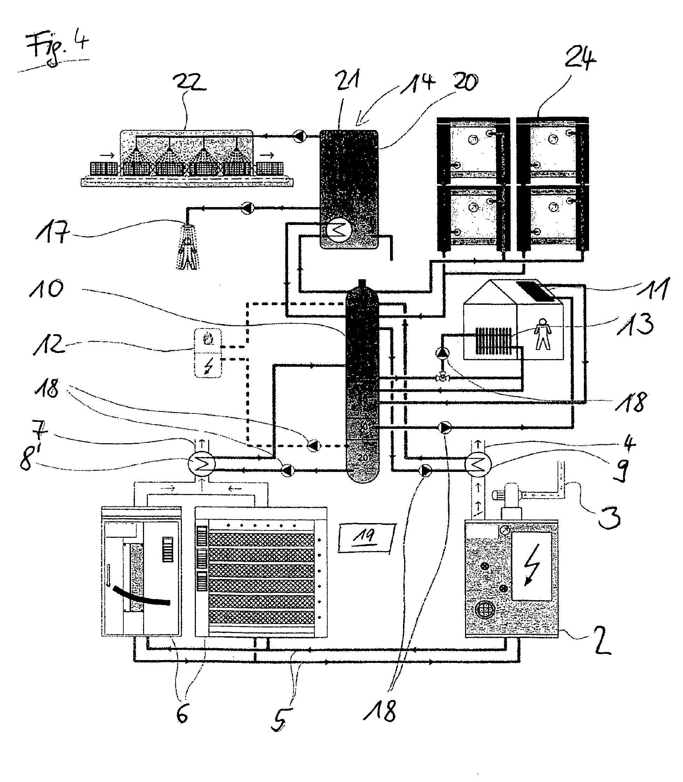

In dem in Figur 4 dargestellten Ausführungsbeispiel ist gegenüber dem Ausführungsbeispiel aus Figur 3 anstelle des dort verwendeten Pufferspeichers 23 ein Wärmespeicher 24 vorgesehen. Im Gegensatz zum Pufferspeicher 23 verwendet der Wärmespeicher 24 die Speicherung der Wärmeenergie nicht das gleiche Wärmeträgermedium wie der Laminarturm 10. Vielmehr wird über den Austausch von Wärme die Wärmeenergie des Wärmeträgermediums des Laminarturms 10 auf ein zur Speicherung von Wärmeenergie besonders geeignetes Wärmeträgermedium übertragen und umgekehrt. Als für die Speicherung von Wärmeenergie im Wärmespeicher 24 besonders geeignetes Wärmeträgermedium hat sich ein Alcangemisch herausgestellt.

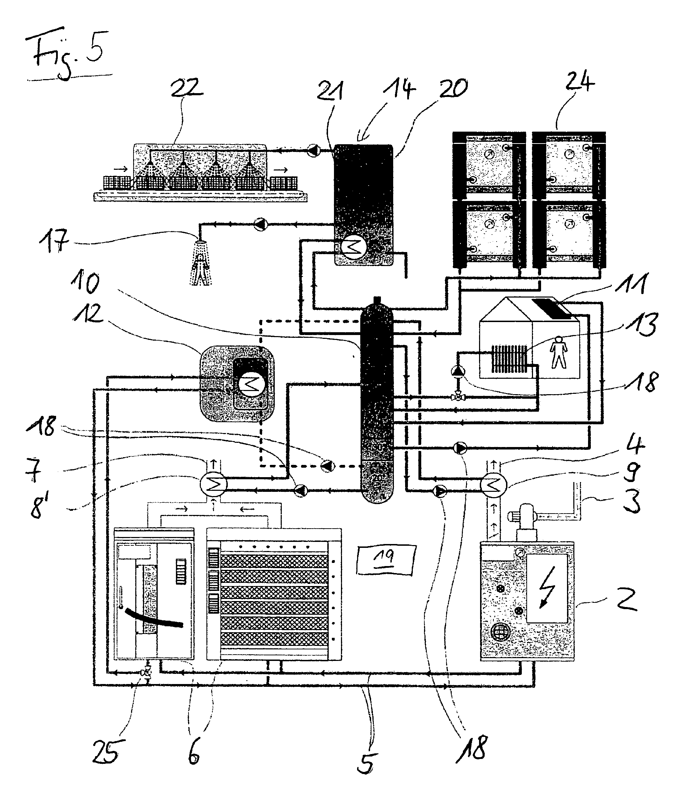

Beim Ausführungsbeispiel gemäß Figur 5 ist gegenüber dem Ausführungsbeispiel aus Figur 4 der Nacherhitzer 12 geändert. Der Nacherhitzer 12 wird bei diesem Ausführungsbeispiel nicht elektrisch oder mit Gas betrieben. Vielmehr wird das Wärmeträgermedium des Laminarturms 10 in dem Nacherhitzer 12 mit Hilfe eines Wärmeübergangs vom Thermoöl auf das Wärmeträgermedium realisiert. Das für die Nacherhitzung benötigte Thermoöl kann direkt von der Thermoölkesselanlage 2 stammen. Es ist jedoch besonders bevorzugt, wenn das wenigstens einen Backofen 6 durchlaufende Thermoöl dem Nacherhitzer 12 zugeführt wird. Dazu ist ein Ventil 25 vorgesehen, mit dem die Thermoölzufuhr zum Nacherhitzer 12 reguliert werden kann, wobei das dem Nacherhitzer 12 zugeführte Thermoöl wahlweise direkt von der Thermoölkesselanlage 2 oder von einem Backofen 6 stammen kann. Dem Thermoöl wird im Nacherhitzer 12 Wärme entzogen, wodurch es abkühlt.

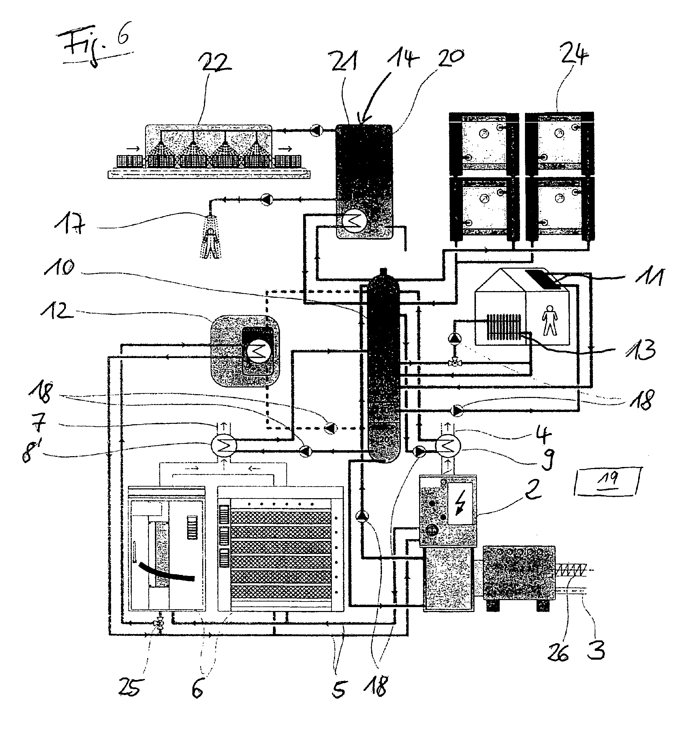

Im Ausführungsbeispiel gemäß Figur 6 wird im Gegensatz zu den vorherigen Ausführungsbeispielen die Thermoölkesselanlage 2 nicht mit Gas, sondern mit Biomasse betrieben. Die Biomasse wird der Thermoölkesselanlage 2 über eine Förderschnecke 26 zugeführt. Außerdem ist die Thermoölkesselanlage 2 mit dem Laminarturm 10 so verbunden, dass das Wärmeträgermedium im Laminarturm 10 durch die Thermoölkesselanlage 2 direkt erhitzt werden kann. Im dargestellten Ausführungsbeispiel lässt sich das Wärmträgermedium durch die Thermoölkesselanlage 2 von 20°C auf 90°C erhitzen.

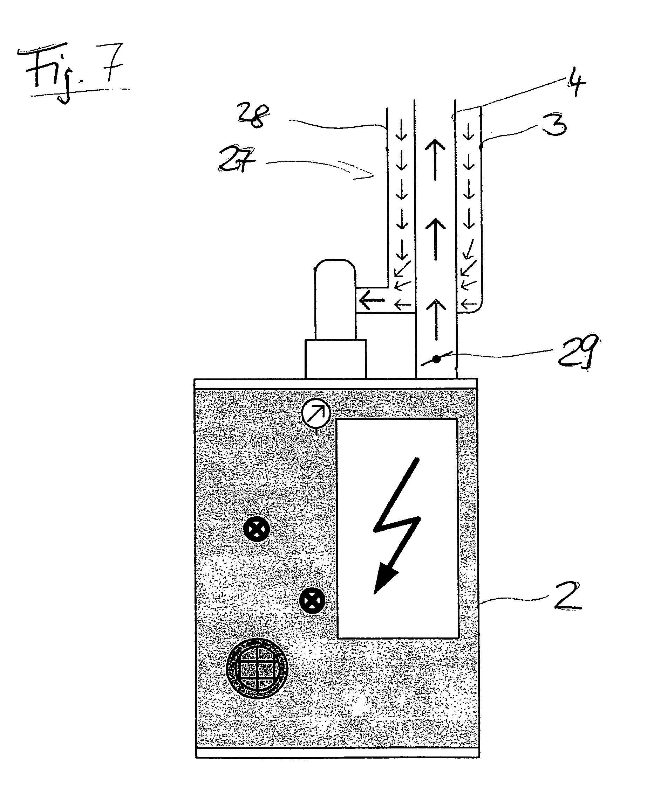

In Figur 7 ist eine bevorzugte Ausgestaltung der Thermoölkesselanlage 2 dargestellt. Die Brennerluftzuführung 3 und der Kamin 4 der Thermoölkesselanlage 2 sind als Doppelrohr-Wärmetauscher 27 ausgeführt. Dabei werden die heißen Abgase der Thermoölkesselanlage 2 durch das Innere eines doppelwandigen Rohres 28 geleitet, während die Brennerluft - in der Regel Frischluft aus der Umgebung - durch den äußeren, ringförmigen Teil des doppelwandigen Rohres 28 geführt wird. Die in den Abgasen gegebenenfalls auch nach einem Rauchgaswärmetauscher (nicht dargestellt) vorhandene Wärme wird so genutzt, um die Brennerluft vorzuwärmen. Der Wirkungsgrad der Thermoölkesselanlage 2 kann dadurch erhöht werden.

Am Kamin 4 ist außerdem eine Abgasklappe 29 vorgesehen, mit der sich der Kamin 4 wahlweise verschließen lässt. Mit Hilfe dieser Abgasklappe 24 ist es möglich, zu verhindern, dass während des Stillstandes der Thermoölkesselanlage 2 kalte Frischluft durch den Kamin 4 in den Brennraum der Thermoölkesselanlage 2 eintritt. Vielmehr wird durch Verschließen des Kamins die von dem vorhergehenden Brennvorgang noch erhitzte Luft in der Brennkammer festgehalten. Dadurch kann der Wirkungsgrad der Thermoölkesselanlage 2 weiter erhöht werden.

## Patentansprüche

1. Anordnung zum energieeffizienten Betreiben einer Backstube umfassend wenigstens einem Backofen (6) zum Backen von Backwaren mit einem Kamin (7), **dadurch gekennzeichnet, dass** ein mit einem flüssigen Wärmeträgermedium gefüllter Laminarturm (10) als schichtend hydraulische Weiche und an dem Kamin (7) des Backofens (6) ein Wärmetauscher (8) vorgesehen ist, wobei der Wärmetauscher (8) an dem Laminarturm (10) angeschlossen und zum Erhitzen des flüssigen Wärmeträgermediums im Laminarturm (10) von einer tieferen Temperatur auf eine höhere Temperatur ausgebildet sind und an dem Laminarturm (10) wenigstens ein Verbraucher angeschlossen ist.

2. Anordnung nach Anspruch 1, **dadurch gekennzeichnet, dass** der Backofen (6) ein Thermoöl-Backofen ist und wenigstens eine Thermoölkesselanlage (2) zur Erhitzung von Thermoöl mit einem Kamin (4) sowie ein Leitungspaar (5) zwischen Thermoölkesselanlage (2) und Thermoölbackofen (6) zur Hin- und Rückführung des Thermoöls vorgesehen ist, wobei an dem Kamin (4) der Thermoölkesselanlage (2) ein Rauchgaswärmetauscher (9) vorgesehen ist, der Rauchgaswärmetauscher (9) an dem Laminarturm (10) angeschlossen und zum Erhitzen des flüssigen Wärmeträgermediums im Laminarturm (10) von einer tieferen Temperatur auf eine höhere Temperatur ausgebildet ist, und wobei der Wärmetauscher (8) am Kamin (7) des Backofens (6) vorzugsweise ein Schwadenkondensator (8') ist.

3. Anordnung nach Anspruch 1 oder 2, **dadurch gekennzeichnet, dass** der Verbraucher ein Heizungssystem, vorzugsweise ein Raumheizungssystem (13), und/oder ein System zur Erhitzung von Frischwasser (14) ist.

4. Anordnung nach Anspruch 3, **dadurch gekennzeichnet, dass** das System zur Erhitzung von Frischwasser (14) einen dem Laminarturm (10) verbundener Pufferspeicher (15) umfasst, wobei im Pufferspeicher (15) ein Wärmetauscher (16) zur Erhitzung von Frischwasser vorgesehen ist.

5. Anordnung nach Anspruch 3, **dadurch gekennzeichnet, dass** das System zur Erhitzung von Frischwasser (14) einen Frischwasserspeicher (20) umfasst, der einen am Laminarturm (10) angeschlossenen Wärmetauscher (21) aufweist.

6. Anordnung nach einem der vorhergehenden Ansprüche, **dadurch gekennzeichnet, dass** am Laminarturm (10) ein Solarkollektor (11) zur Erhitzung des flüssigen Wärmeträgermediums im Laminarturm (10) von einer tieferen Temperatur auf eine höhere Temperatur angeschlossen ist.

7. Anordnung nach einem der vorhergehenden Ansprüche, **dadurch gekennzeichnet, dass** am Laminarturm (10) ein elektrischer oder gasbetriebener Nacherhitzer (12) zur Erhitzung des flüssigen Wärmeträgermediums im Laminarturm (10) von einer tieferen Temperatur auf eine höhere Temperatur angeschlossen ist.

8. Anordnung nach einem der vorhergehenden Ansprüche, **dadurch gekennzeichnet, dass** am Laminarturm ein Nacherhitzer (12) zur Erhitzung des flüssigen Wärmeträgermediums im Laminarturm (10) von einer tieferen Temperatur auf eine höhere Temperatur angeschlossen ist, wobei der Nacherhitzer (12) mit Thermoöl der Thermoölkesselanlage (2) betrieben wird.

9. Anordnung nach einem der vorhergehenden Ansprüche, **dadurch gekennzeichnet, dass** die Thermoölkesselanlage (2) am Laminarturm (10) zur Erhitzung des flüssigen Wärmeträgermediums im Laminarturm (10) von einer tieferen Temperatur auf eine höhere Temperatur angeschlossen ist.

10. Anordnung nach einem der vorhergehenden Ansprüche, **dadurch gekennzeichnet, dass** am Laminarturm (10) wenigstens ein Pufferspeicher (23) angeschlossen ist.

11. Anordnung nach einem der vorhergehenden Ansprüche, **dadurch gekennzeichnet, dass** wenigstens ein Wärmespeicher (24) mit dem Laminarturm (10) verbunden ist wobei der Wärmespeicher (24) vorzugsweise mit einem Alcangemisch gefüllt ist.

12. Anordnung nach einem der vorhergehenden Ansprüche, **dadurch gekennzeichnet, dass** die Thermoölkesselanlage eine Brennerluftzuführung (3) umfasst und vorzugsweise die Brennerluftzuführung (3) und der Kamin (4) der Thermoölkesselanlage (2) als Doppelrohr-Wärmetauscher (27) ausgeführt sind.

13. Anordnung nach einem der vorhergehenden Ansprüche, **dadurch gekennzeichnet, dass** am Kamin (4) der Thermoölkesselanlage (2) eine Abgasklappe (29) zum wahlweisen Verschließen des Kamins (4) vorgesehen ist.

14. Anordnung nach einem der vorhergehenden Ansprüche, **dadurch gekennzeichnet, dass** die Thermoölkesselanlage (2) als Biomasseverbrennungsanlage ausgebildet ist.
